# FASCICULE DE BREVET EUROPEEN

(11) **EP 2 981 461 B1**
(45) Date de publication et mention de la délivrance du brevet: **11.01.2017**
(21) Numéro de dépôt: 14713144.5
(22) Date de dépôt: 28.03.2014
(51) Int. Cl.: B64G 1/62, B64C 25/10, B64G 1/14, B64C 9/32, B64C 25/16

(54) **DISPOSITIF DE CONTRÔLE DE LA VITESSE D'UN AVION SPATIAL LORS DE LA TRANSITION D'UNE PHASE DE VOL SPATIAL VERS UNE PHASE DE VOL AÉRONAUTIQUE ET PROCÉDÉ DE TRANSITION ASSOCIÉ**
VORRICHTUNG ZUR STEUERUNG DER GESCHWINDIGKEIT EINES RAUMFAHRZEUGS WÄHREND DES ÜBERGANGS VON EINER RAUMFAHRTPHASE ZU EINER FLUGPHASE SOWIE ENTSPRECHENDES ÜBERGANGSVERFAHREN
DEVICE FOR CONTROLLING THE SPEED OF A SPACEPLANE DURING THE TRANSITION FROM A PHASE OF SPACE FLIGHT TO A PHASE OF AERONAUTICAL FLIGHT AND ASSOCIATED TRANSITION METHOD

(30) Priorité: 05.04.2013 FR 1353088
(43) Date de publication de la demande: 10.02.2016
(73) Titulaire: Airbus Defence and Space SAS, 78130 Les Mureaux (FR)
(72) Inventeur: FERREIRA, Eugénio, F-75016 Paris (FR); SANTERRE, Angélique, F-33480 Listrac-medoc (FR); FAURE, Benjamin, F-33110 Le Bouscat (FR); CHEVROLLIER, Samuel, F-65000 Tarbes (FR); PARPAITE, Pierre, F-65360 Saint Martin (FR); FAVRE, Christophe, F-65400 Lau Balagnas (FR)
(74) Mandataire: Schmit, Christian Marcel Jean
(86) Numéro de dépôt international: PCT/EP2014/056349
(87) Numéro de publication internationale: WO 2014/161794

(56) Documents cités:
- WO-A2-00/43267
- WO-A2-2007/002243
- FR-A1- 2 924 411
- JP-A- 2001 206 298
- US-A1- 2005 230 529
- US-A1- 2007 068 138

## Description

### Arrière plan de l'invention

### Domaine de l'invention

L'invention concerne un dispositif de contrôle de la vitesse d'un aéronef notamment de type avion spatial, lors de la transition d'une phase de vol spatial vers une phase de vol aéronautique de cet aéronef et concerne un procédé de transition associé.

Un avion spatial est un aéronef spatial adapté à un vol aéronautique et comprenant pour ce faire des surfaces portantes. En tant qu'aéronef spatial il comprend par exemple un moteur fusée et des moyens adaptés à le piloter en absence d'air ou autre gaz porteur.

On connaît par exemple le document US 2005/0230529 A1, qui est considéré comme étant l'état de la technique le plus proche et divulgue le préambule de la revendication 1.

Une problématique d'un tel aéronef est sa rentrée dans l'atmosphère et en particulier le passage d'un vol de type balistique ou sans portance à un vol aéronautique pour lequel l'aéronef utilise la portance offerte par l'atmosphère.

Pour un avion spatial une contrainte particulière est qu'il est nécessaire de limiter les charges et accélérations subies par la structure et les passagers de l'aéronef à des valeurs réduites comparativement par exemple à des aéronefs dont l'équipage est constitué de spationautes entraînés tels que la navette spatiale anciennement exploitée par la NASA.

### Arrière plan technologique

Il existe comme dispositifs de freinage pour des avions atmosphériques classiques des aérofreins disposés au dessus des ailes ou en partie haute du fuselage.

Il existe en outre dans le cadre des avions atmosphériques des systèmes de freinage utilisant des trappes de trains d'atterrissages comme connu sur l'avion militaire américain F-111.

Toutefois, l'utilisation de tels dispositifs n'existe pas dans le domaine spatial.

Aujourd'hui, pour qu'un avion spatial ou une navette spatiale passe d'un vol spatial à un vol aéronautique, il freine en appuyant sa face inférieure sur l'air ce qui accroît la traînée de l'aéronef. Ainsi, l'avion spatial freine et perd de l'altitude.

Dans le cas de la navette spatiale américaine ce freinage cause un échauffement important et un nombre de G correspondant à la mesure de la décélération conséquent est subi par l'équipage.

### Brève description de l'invention

L'invention a pour but de proposer un dispositif de contrôle de la vitesse d'un aéronef tel qu'un avion spatial lors de la transition d'une phase de vol spatial vers une phase de vol aéronautique adapté à permettre à l'avion d'avoir une phase de freinage et de retour à un vol aéronautique avec des contraintes de charge et de décélération réduites.

Comme vu plus haut, un avion spatial est un aéronef capable de vol aéronautique et capable de vol spatial.

En vol spatial, l'aéronef peut décrire une orbite autour de la Terre, vol orbital par exemple ou simplement avoir une trajectoire en forme d'arc parabolique selon un vol suborbital notamment, avec une altitude maximale de quelques dizaines à quelques centaines de kilomètres. Dans les deux cas, le retour en phase de vol aéronautique nécessite de maitriser la vitesse de l'avion afin de limiter les charges s'appliquant sur cet avion et sur ses passagers.

Pour ce faire l'invention propose un aéronef spatial adapté à un vol aéronautique comportant un corps et au moins une première voilure définissant une surface
portante ainsi que des moyens de contrôle d'attitude, ledit aéronef comportant un ou plusieurs volets disposés sous sa surface portante et manoeuvrables entre une position rentrée et une position sortie inclinée de freinage aérodynamique lors de la transition d'une phase de vol spatial vers une phase de vol aéronautique de l'aéronef.

Préférablement, le ou les volets sont adaptés à une sortie selon des inclinaisons variables pilotables.

Avantageusement l'aéronef comprend au moins une paire de volets disposés de part et d'autre d'un axe longitudinal de l'aéronef.

Selon un mode de réalisation particulier, les volets sont adaptés à être pilotés indépendamment les uns des autres en sorte de contrôler une descente de l'aéronef.

Selon un mode de réalisation avantageux, toute ou partie des volets sont des dispositifs aérofreins/portes de trains.

Avantageusement, les volets sont manoeuvrables selon les phases de vol indépendamment des trains d'atterrissage ou en liaison avec les trains d'atterrissage.

Selon un mode de réalisation particulier, les volets comportent un premier axe de manoeuvre d'ouverture des volets à l'encontre du lit du vent, les volets fonctionnant alors en aérofreins, et un axe de manoeuvre d'ouverture des volets parallèle au lit du vent les volets fonctionnant alors en trappes de train.

Les volets aérofreins/portes de trains sont préférentiellement manoeuvrés par des actionneurs dimensionnés pour permettre une ouverture partielle des aérofreins lors de la transition entre descente spatiale et descente aéronautique ainsi que pour permettre l'ouverture complète des portes de trains à l'atterrissage, les actionneurs étant adaptés à ouvrir les volets de manière modulable suivant les phases de vol.

Selon un mode de réalisation particulier, les moyens de contrôle d'attitude comprennent des gouvernes de profondeur.

L'invention concerne en outre un procédé de contrôle de la vitesse d'un aéronef selon l'une quelconque des revendications précédentes lors d'une phase de descente de l'aéronef avec transition d'une phase de vol spatial vers une phase de vol aéronautique de l'aéronef, cette phase de descente comprenant:
- une première étape de descente parabolique de l'aéronef, aéronef en position de forte incidence;
- une deuxième étape de mise à piqué de l'aéronef et;
- une troisième étape de ressource de l'aéronef en vol aérodynamique à faible incidence;
pour lequel un contrôle de la vitesse de l'aéronef est réalisé au moins dans la deuxième étape au moyen de l'ouverture desdits volets.

La position de forte incidence est notamment définie par un angle entre l'axe longitudinal et l'axe vitesse de l'aéronef supérieur à 40°.

Selon un mode de réalisation particulier, le contrôle de la vitesse de l'aéronef par l'ouverture desdits volets est commencé pendant la première étape.

Les moyens de contrôle d'attitude de l'aéronef comprenant des gouvernes de profondeur, ces dernières sont préférablement braquées pour entraîner un moment à cabrer de l'aéronef pendant la première étape.

Le passage de la première à la seconde étape se fait avantageusement par redressement des gouvernes de profondeur, l'ouverture des volets contrôlant la vitesse de l'aéronef.

A l'issue de la deuxième étape l'aéronef ayant pris de la portance, l'étape de ressource est préférablement réalisée par braquage des gouvernes de profondeur pour entraîner un moment à cabrer de l'aéronef les volets étant alors refermés.

Selon un mode de réalisation avantageux, la transition du domaine spatial vers le domaine aéronautique d'un avion spatial de l'invention comprenant des portes de train adaptées à fonctionner en volets aérofreins comprend :
- une première étape de braquage des gouvernes de profondeur en sorte d'entraîner un moment à cabrer de l'aéronef, l'avion spatial ayant une vitesse V pratiquement verticale et à forte incidence I, l'avion spatial étant maintenu sensiblement à l'horizontale;
- une deuxième étape d'ouverture des portes de train et de redressement de la gouverne de profondeur, l'avion spatial étant ainsi mis à piquer, la vitesse V de l'avion spatial étant pratiquement verticale et à faible incidence I;
- une troisième étape de braquage des gouvernes de profondeur en sorte d'entraîner un moment à cabrer de l'aéronef et de fermeture des portes de train, pour laquelle l'avion spatial reprend un fonctionnement aéronautique, l'avion spatial et la vitesse V étant ramenés à l'horizontale, ledit avion étant à faible incidence I.

### Brève description des dessins

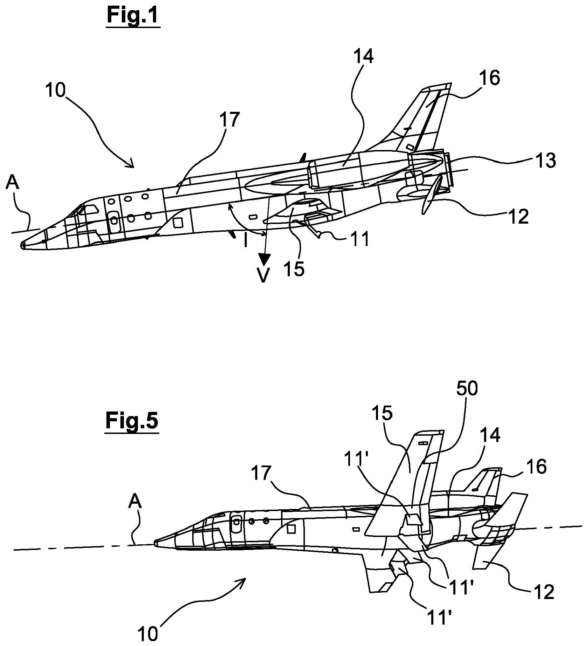

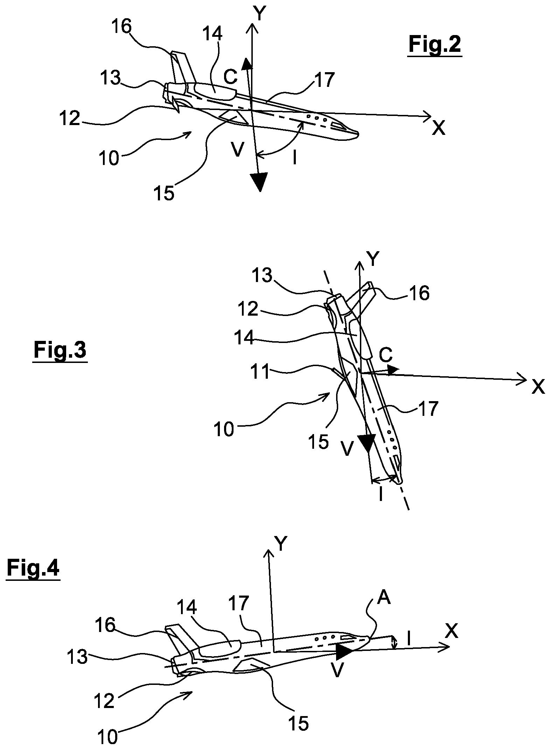

L'invention sera mieux comprise à la lecture de la description qui suit d'un exemple non limitatif de réalisation de l'invention et à l'examen des dessins qui l'accompagnent. Ces dessins ne sont données qu'à titre illustratif mais nullement limitatif de l'invention et représentent
en figure 1: une vue d'un aéronef de type avion spatial selon l'invention;
en figure 2: une première phase de descente spatiale de l'avion spatial de la figure 1;
en figure 3: une phase de transition de l'avion spatial de la figure 1;
en figure 4: une phase de vol atmosphérique de l'avion spatial de la figure 1;
en figure 5: une vue agrandie de l'avion spatial de la figure 1; en finale avant atterrissage avec des portes de trains de voilure en position d'ouvertures de case de train selon un mode de réalisation particulier de l'invention.

### Description détaillée de modes de réalisation de l'invention

Comme vu plus haut, l'invention a pour but de proposer un dispositif de contrôle de la vitesse, et de limitation des charges induites, d'un aéronef tel qu'un avion spatial 10 lors d'une transition d'une phase de vol spatial, vers une phase de vol aéronautique.

Elle s'applique par exemple à un avion spatial 10 tel que représenté en figure 1 comporte un fuselage 17, une voilure constituée par des ailes 15, des gouvernes 12, une dérive 16, des moteurs fonctionnant en vol aéronautique tels des réacteurs 14 et un moteur fusée 13.

La phase de vol spatial ou balistique est illustrée à la figure 2. C'est une phase de vol où la voilure de l'aéronef n'a pas de portance du fait du manque d'air, l'incidence de l'aéronef étant en outre telle que les surfaces portantes sont de toute façon en situation de décrochage.

La phase de vol aéronautique est illustrée à la figure 4 et, dans cette phase, l'aéronef est en vol traditionnel porté par sa voilure.

Pour passer de la phase de vol spatial ou balistique à la phase de vol aéronautique, il est réalisé selon un aspect de l'invention une transition qui utilise une étape de piqué comme illustré à la figure 4.

Pour son retour, un avion spatial 10 doit effectuer une transition entre le vol spatial et un vol aéronautique, figure 4. En outre il doit freiner notablement et contrôler sa vitesse tout au long de la transition entre cette phase de vol spatial et la phase de vol aéronautique.

Dans la phase de vol spatial l'aéronef freine par frottement dans l'atmosphère. Pour ce faire il est dans une attitude à très forte incidence, plus de 40° voir même dans les 70° d'incidence et a un vecteur vitesse pratiquement vertical.

Dans cette situation l'aéronef ne vole pas proprement dit puisque sa voilure principale est en décrochage permanent.

La solution choisie dans la présente invention pour passer de la phase de vol spatial à une phase de vol aéronautique portée par la voilure de l'aéronef est de faire piquer l'aéronef de sorte que son incidence se réduise sans besoin de changer son vecteur vitesse.

Le piqué doit toutefois être contrôlé pour maintenir l'aéronef dans une configuration de vitesse, d'accélération et de charges raisonnable.

Pour ce faire, l'avion spatial 10 comporte selon l'invention des volets 11 fonctionnant comme aérofreins adaptés à le freiner dans une transition de vol où il n'est pas encore en vol aéronautique et maitriser sa vitesse V lors de cette transition.

Les volets 11 représentés notamment à la figure 1 sont disposés sous les ailes et/ou sous le fuselage de l'aéronef et manoeuvrables entre une position rentrée et une position sortie de freinage aérodynamique.

En phase de descente spatiale selon la figure 2, l'avion spatial 10 a ses volets 11 fermées et ses gouvernes de profondeur 12 braquées en sorte d'entraîner un moment à cabrer de l'aéronef. L'avion spatial 10 est alors presque à l'horizontale. Son incidence I, angle entre l'axe longitudinal avion A et le vecteur vitesse est préférentiellement supérieure à 40° et peut même se trouver entre 70° et 90° par rapport à sa vitesse V, qui elle, est quasiverticale. Ainsi la résistance à l'air est importante et on maximise la traînée. L'objectif est de limiter les accélérations subies par les passagers, le pilote et l'avion spatial 10. Du fait de l'incidence importante, la voilure principale 15 est décrochée.

Le décrochage se caractérise par une perte brutale de portance de la voilure d'un aéronef, l'avion n'est plus soutenu et chute.

Lors du décrochage, l'avion s'enfonce et perd rapidement de l'altitude, c'est le mode suivi pour la descente spatiale bien que le décrochage soit ici dû au fait que dans le début de la phase de descente l'air est trop raréfié pour porter l'aéronef qui se trouve en outre dès le départ dans une position à trop forte incidence pour que ses ailes aient de la portance.

Les gouvernes dans le lit du vent ne sont par contre pas décrochées.

Selon la figure 3, pour réaligner l'axe longitudinal avion et l'axe vitesse V afin de repasser en vol aéronautique, l'avion spatial 10 réalise un piqué.

Pour ce faire on utilise une surface mobile capable de s'orienter dans le lit du vent, cette surface étant constituée par les gouvernes de profondeur 12 de l'aéronef qui sont manoeuvrées pour faire basculer l'aéronef à piquer. Selon l'exemple, les gouvernes sont idéalement un plan horizontal complètement mobile autour d'un axe de manoeuvre.

Dans ce cas les commandes à cabrer de l'aéronef correspondent à une rotation des gouvernes autour de leur axe dans un sens pour lequel leur bord d'attaque s'abaisse et leur bord de fuite remonte ce que l'on traduit dans la présente demande par le terme braquage à cabrer ou braquage entraînant un moment à cabrer.

Les commandes à piquer correspondent pour leur part à une rotation des gouvernes telles que leur bord d'attaque soit relevé et leur bord de fuite abaissé ce que l'on traduit ici par braquer les gouvernes à piquer ou braquer les gouvernes pour entraîner un moment à piquer par ailleurs lorsque les gouvernes sont ramenées vers une position neutre on parlera ici de redresser les gouvernes.

Les gouvernes de profondeur sont ensuite utilisées tout au long du piqué pour assurer la stabilité de l'avion spatial 10 en compensant à piquer ou à cabrer selon les variations d'attitude de l'aéronef.

Il est à noter que avant le piqué, en phase de vol spatial, les gouvernes 12 sont déjà orientées dans le lit du vent et donc en position à cabrer pour qu'elles aient de la portance et puissent permettre de manoeuvrer l'aéronef et contrôler son attitude.

Lorsque l'avion spatial 10 réalise le piqué, figure 3, sa vitesse V augmente sensiblement et rapidement. Cette augmentation de vitesse V doit être maitrisée et limitée afin de permettre une manoeuvre de ressource efficace mais aussi pour que l'aéronef reste dans un domaine de Mach cohérent du domaine dans lequel la portance de la voilure est optimale.

Le nombre de Mach exprime le rapport de la vitesse locale d'un fluide à la vitesse du son dans ce même fluide. La maitrise et la limitation de la vitesse de l'avion spatial 10 est de plus nécessaire afin de garantir des niveaux de charges acceptables pour les passagers, c'est-à-dire des niveaux de charges préférablement inférieurs à 2°g, valeur restant confortable. Les volets 11 réalisent ces fonctions de maitrise et de limitation de la vitesse lors de la phase de piqué de l'avion spatial 10.

Les volets 11 constituent des aérofreins qui sont utilisés pour maitriser et limiter la vitesse V et la stabilité de l'avion spatial 10 lors de sa descente spatiale. Ils peuvent servir aussi au freinage lors de l'atterrissage mais aussi à gérer l'énergie en phase d'approche finale, comme des aérofreins classiques.

Ici utilisés comme aérofreins dans le domaine spatial, les volets 11 sont conçus pour résister aux conditions du régime d'écoulement subsonique. Un écoulement autour d'un obstacle est en régime subsonique lorsque le nombre de Mach est inférieur au Mach critique qui correspond à l'apparition d'une onde de choc. Les conditions cinématiques diffèrent sensiblement des conditions pour lesquelles sont usuellement conçus les aérofreins destinés en phase d'approche. En effet, la phase de descente spatiale, figure 2, est prévue pour conduire l'avion spatial 10 à une altitude d'environ 15km (50000 pieds), avec un nombre de Mach inférieur à 0,6 et notamment compris entre 0.5 et 0.55 et une pression dynamique inférieure à 3000 Pa et préférablement de 2000 à 2500 Pa, ces valeurs pouvant varier en fonction des missions.

A l'issue de la manoeuvre de piqué de l'avion spatial 10, donc en deuxième phase de descente spatiale, figure 3, ainsi que lors du retour de l'avion spatial en fonctionnement aéronautique, figure 4, l'avion spatial est à une altitude d'environ 11 km et un nombre de Mach inférieur au Mach critique soit 0,9 et préférablement de 0,6 à 0,7. Les maximums atteints pendant la transition du domaine spatial au domaine aéronautique ont un nombre de Mach d'environ 0.8 à 0.85 et une pression dynamique entre 7000 et 10 000 Pa. Ces chiffres sont donnés à titre indicatif, et peuvent bien sûr varier en fonction de la mission. A titre de comparaison, à l'atterrissage, la pression dynamique est d'environ 5 000 Pa et la vitesse est de l'ordre de Mach 0.2 à 0.3 ce qui est notablement inférieur.

En résumé, selon l'invention, la transition du domaine spatial vers le domaine aéronautique comprend:
- une première étape de descente de l'aéronef 10 qui a une vitesse V pratiquement verticale alors que son attitude est sensiblement à l'horizontale et donc à forte incidence I, étape pendant laquelle les gouvernes de profondeur 12 de l'aéronef sont abaissées à peu près parallèlement au lit du vent relatif;
- une deuxième étape où l'aéronef réalise un piqué au moyen d'un redressement des gouvernes de profondeur 12, la vitesse V de l'avion spatial restant pratiquement verticale et l'incidence I de l'aéronef étant alors réduite, la vitesse de l'aéronef étant dans cette étape réduite et stabilisée par l'ouverture plus ou moins prononcée des volets 11;
- une troisième étape pour laquelle l'aéronef reprend un fonctionnement aéronautique, la vitesse V devenant l'horizontale et l'aéronef volant alors à faible incidence I, cette étape étant réalisée par abaissement des gouvernes de profondeur 12 et la fermeture des volets 11.

Puisque les volets/aérofreins 11 sont dimensionnés par rapport à la phase de descente spatiale, ils ont une masse non négligeable. Ainsi, dans le mode de réalisation avantageux décrit, une deuxième fonction leur est attribuée : lorsque l'avion spatial 10 n'est pas en phase de transition entre le mode spatial et le mode aéronautique, les aérofreins 11 jouent aussi le rôle de portes de trains. Ils demeurent fermés pour limiter la trainée aérodynamique et protéger les trains d'atterrissage.

Afin d'assurer le succès de la manoeuvre de transition du domaine spatial, figure 2, vers le domaine aéronautique, figure 4, les volets 11 sont placés à l'intrados 50 de la voilure 15 sous la surface portante de l'aéronef. Ils permettent ainsi d'ajuster la trainée, sans perturber la contrôlabilité, et en impactant le moins possible la portance C de l'aéronef. Pour limiter davantage l'impact sur la portance C, les aérofreins 11 sont éventuellement situés sur le fuselage 17 au niveau des portes de trains du ventre mou 51. Selon l'exemple, les volets sont en outre des trappes de trains. Dans ce cas, les volets sont avantageusement manoeuvrables selon les phases de vol indépendamment des trains d'atterrissage ou en liaison avec les trains d'atterrissage.

Lorsque le dispositif aérofreins/portes de trains 11 est totalement dissociable des trains d'atterrissage sur l'ensemble du vol, les actionneurs sont dimensionnés pour ouvrir les aérofreins avec l'angle nécessaire au contrôle de la trainée en phase de descente spatiale, mais aussi pour permettre une ouverture complète des portes de train à l'atterrissage afin de sortir les trains d'atterrissage. Puisque les aérofreins/portes de train sont dissociés des trains d'atterrissage, afin de réduire l'émission de bruits à l'atterrissage par exemple, on peut refermer les portes de trains quand les trains d'atterrissage sont sortis.

Coupler et découpler les aérofreins/portes de trains 11 avec les trains d'atterrissage suivant les phases de vol est aussi possible. Ainsi en phase de descente spatiale, les portes sont connectées aux actionneurs aérofreins et déconnectées des actionneurs communs aux trains d'atterrissage. A l'inverse, lors de la phase d'atterrissage, les portes de train sont connectées aux actionneurs trains d'atterrissage et déconnectées des actionneurs aérofreins.

L'ensemble aérofreins/portes de trains peut éventuellement pivoter autour d'axes différents, perpendiculaire au sens vol ou parallèle au sens vol, suivant les phases de vol et les fonctions aérofreins et portes de trains assurées dans ces différentes phases de vol par pivotement autour de l'axe souhaité. Ainsi, les volets 11' lorsqu'ils sont utilisés en aérofreins pivotent autour de l'axe perpendiculaire à l'axe avion A et lorsqu'ils fonctionnent en portes de train pour ouvrir les cases de train, comme représenté en figure 5, les volets 11' pivotent selon des axes parallèle à l'axe principal de l'aéronef pour réduire la trainée occasionnée par leur ouverture dans cette phase de vol.

L'invention n'est pas limitée aux exemples représentés et notamment le nombre de volets peut être de deux, de quatre ou plus pour équilibrer le freinage lors de la descente spatiale.

## Revendications

1. Aéronef spatial adapté à un vol aéronautique comportant un corps et au moins une première voilure (15) définissant une surface portante ainsi que des moyens de contrôle d'attitude **caractérisé en ce que** lesdits moyens de contrôle comportent un ou plusieurs volets disposés sous la surface portante et manoeuvrables entre une position rentrée et une position sortie inclinée de freinage aérodynamique lors de la transition d'une phase de vol spatial vers une phase de vol aéronautique de l'aéronef.

2. Aéronef spatial selon la revendication 1 pour lequel le ou les volets sont adaptés à une sortie selon des inclinaisons variables pilotables.

3. Aéronef spatial selon la revendication 1 ou 2 comportant au moins une paire de volets disposés de part et d'autre d'un axe longitudinal de l'aéronef.

4. Aéronef spatial selon la revendication 3 pour lequel les volets sont adaptés à être pilotés indépendamment les uns des autres en sorte de contrôler une descente de l'aéronef.

5. Aéronef spatial selon l'une quelconque des revendications précédentes pour lequel toute ou partie des volets sont des dispositifs aérofreins/portes de trains (11).

6. Aéronef spatial selon la revendication 5 pour lequel les volets sont manoeuvrables selon les phases de vol indépendamment des trains d'atterrissage ou en liaison avec les trains d'atterrissage.

7. Aéronef spatial selon la revendication 6 pour lequel les volets comportent un premier axe de manoeuvre d'ouverture des volets à l'encontre du lit du vent, les volets fonctionnant alors en aérofreins, et un axe de manoeuvre d'ouverture des volets parallèle au lit du vent les volets fonctionnant alors en trappes de train.

8. Aéronef spatial selon la revendication 5, 6 ou 7, pour lequel les volets aérofreins/portes de trains (11) sont manoeuvrés par des actionneurs dimensionnés pour permettre une ouverture partielle des aérofreins lors de la transition entre descente spatiale et descente aéronautique ainsi que pour permettre l'ouverture complète des portes de trains à l'atterrissage, les actionneurs étant adaptés à ouvrir les volets de manière modulable suivant les phases de vol.

9. Aéronef spatial selon l'une quelconque des revendications précédentes pour lequel les moyens de contrôle d'attitude comprennent des gouvernes de profondeur (12).

10. Aéronef spatial selon la revendication 9 dans lequel une deuxième voilure (15) comporte les gouvernes de profondeur (12).

11. Procédé de contrôle de la vitesse d'un aéronef selon l'une quelconque des revendications précédentes lors d'une phase de descente de l'aéronef avec transition d'une phase de vol spatial vers une phase de vol aéronautique de l'aéronef, cette phase de descente comprenant:
- une première étape de descente parabolique de l'aéronef, aéronef en position de forte incidence;
- une deuxième étape de mise à piqué de l'aéronef et;
- une troisième étape de ressource de l'aéronef en vol aérodynamique à faible incidence ;
pour lequel un contrôle de la vitesse de l'aéronef est réalisé dans la deuxième étape au moyen de l'ouverture desdits volets.

12. Procédé selon la revendication 11, pour lequel la position de forte incidence est définie par un angle entre l'axe longitudinal et l'axe vitesse de l'aéronef supérieur à 40°.

13. Procédé selon la revendication 11 ou 12, pour lequel le contrôle de la vitesse de l'aéronef par l'ouverture desdits volets est commencé pendant la première étape.

14. Procédé selon la revendication 11, 12 ou 13, pour lequel les moyens de contrôle d'attitude de l'aéronef comprenant des gouvernes de profondeur (12), ces dernières sont braquées en sorte d'entraîner un moment à cabrer de l'aéronef pendant la première étape.

15. Procédé selon la revendication 14, pour lequel le passage de la première à la seconde étape se fait par redressement des gouvernes de profondeur (12), l'ouverture des volets contrôlant la vitesse de l'aéronef.

16. Procédé selon la revendication 15 pour lequel à l'issue de la deuxième étape l'aéronef ayant pris de la portance, l'étape de ressource est réalisée par braquage des gouvernes de profondeur (12) en sorte d'entraîner un moment à cabrer de l'aéronef, les volets étant alors refermés.

17. Procédé de contrôle de la vitesse selon la revendication 11 d'un aéronef de type avion spatial (10) comportant des portes de trains (11) adaptées à fonctionner comme aérofreins, d'une phase de vol spatial suborbital vers une phase de vol aéronautique, **caractérisé en ce que** la transition du domaine spatial vers le domaine aéronautique comprend :
- une première étape de braquage des gouvernes de profondeur (12) en sorte d'entraîner un moment à cabrer de l'avion spatial, l'avion spatial (10) ayant une vitesse V pratiquement verticale et à forte incidence I, l'avion spatial (10) étant maintenu sensiblement à l'horizontale;
- une deuxième étape d'ouverture des portes de train (11) et de redressement de la gouverne de profondeur (12), l'avion spatial (10) étant ainsi mis à piquer, la vitesse V de l'avion spatial (10) étant pratiquement verticale et à faible incidence I;
- une troisième étape de braquage des gouvernes de profondeur (12) en sorte d'entraîner un moment à cabrer de l'avion spatial (10) et de fermeture des portes de train (11), pour laquelle l'avion spatial (10) reprend un fonctionnement aéronautique, l'avion spatial (10) et la vitesse V étant ramenés à l'horizontale, l'aéronef étant à faible incidence I.

## Patentansprüche

1. Raumfahrzeug, das für einen Flug geeignet ist, umfassend einen Körper und mindestens einen ersten Flügel (15), der eine Tragfläche definiert, sowie Lagekontrollmittel, **dadurch gekennzeichnet, dass** die Kontrollmittel eine oder mehrere Klappen umfassen, die unter der Tragfläche angeordnet und zwischen einer eingezogenen und einer ausgefahrenen geneigten aerodynamischen Bremsposition beim Übergang von einer Raumfahrtphase in eine Flugphase des Luftfahrzeugs betätigbar sind.

2. Raumfahrzeug nach Anspruch 1, bei dem die Klappe(n) für ein Ausfahren nach steuerbaren variablen Neigungen geeignet ist/sind.

3. Raumfahrzeug nach Anspruch 1 oder 2, umfassend mindestens ein Klappenpaar, das beiderseits einer Längsachse des Luftfahrzeugs angeordnet ist.

4. Raumfahrzeug nach Anspruch 3, bei dem die Klappen dazu vorgesehen sind, unabhängig voneinander gesteuert zu werden, um einen Sinkflug des Luftfahrzeugs zu kontrollieren.

5. Raumfahrzeug nach einem der vorhergehenden Ansprüche, bei dem die Gesamtheit oder ein Teil der Klappen Luftbremsvorrichtungen/Fahrwerksklappen (11) sind.

6. Raumfahrzeug nach Anspruch 5, bei dem die Klappen je nach den Flugphasen unabhängig von den Fahrwerken oder in Verbindung mit den Fahrwerken betätigbar sind.

7. Raumfahrzeug nach Anspruch 6, bei dem die Klappen eine erste Achse zur Steuerung des Öffnens der Klappen gegen den Wind, wobei die Klappen in diesem Fall als Luftbremsen funktionieren, und eine Achse zur Steuerung des Öffnens der Klappen mit dem Wind umfassen, wobei die Klappen in diesem Fall als Fahrwerksklappen funktionieren.

8. Raumfahrzeug nach Anspruch 5, 6 oder 7, bei dem die Luftbremsklappen/Fahrwerksklappen (11) durch Aktuatoren gesteuert werden, die dimensioniert sind, um ein teilweises Öffnen der Luftbremsen beim Übergang zwischen Raumfahrtssinkflug und Luftfahrtssinkflug zu ermöglichen, sowie um das vollständige Öffnen der Fahrwerksklappen beim Landen zu ermöglichen, wobei die Aktuatoren dazu vorgesehen sind, die Klappen auf modulierbare Weise je nach den Flugphasen zu öffnen.

9. Raumfahrzeug nach einem der vorhergehenden Ansprüche, bei dem die Lagekontrollmittel Höhenruder (12) umfassen.

10. Raumfahrzeug nach Anspruch 9, bei dem ein zweiter Flügel (15) die Höhenruder (12) umfasst.

11. Verfahren zur Kontrolle der Geschwindigkeit eines Luftfahrzeugs nach einem der vorhergehenden Ansprüche während einer Sinkflugphase des Luftfahrzeugs mit Übergang von einer Raumfahrtphase zu einer Luftfahrtphase des Luftfahrzeugs, wobei diese Sinkflugphase umfasst:
- einen ersten Schritt des parabolischen Sinkflugs des Luftfahrzeugs, Luftfahrzeug in Position mit starkem Einfallswinkel;
- einen zweiten Schritt des Sturzflugs des Luftfahrzeugs, und
- einen dritten Schritt der Reserve des Luftfahrzeugs in der Luftfahrtphase mit geringem Einfallswinkel;
bei dem eine Kontrolle der Geschwindigkeit des Luftfahrzeugs im zweiten Schritt mit Hilfe des Öffnens der Klappen erfolgt.

12. Verfahren nach Anspruch 11, bei dem die Position mit starkem Einfallswinkel durch einen Winkel zwischen der Längsachse und der Geschwindigkeitsachse des Luftfahrzeugs über 40° definiert ist.

13. Verfahren nach Anspruch 11 oder 12, bei dem die Kontrolle der Geschwindigkeit des Luftfahrzeugs durch das Öffnen der Klappen während des ersten Schrittes beginnt.

14. Verfahren nach Anspruch 11, 12 oder 13, bei dem die Lagekontrollmittel des Luftfahrzeugs Höhenruder (12) umfassen, wobei diese letztgenannten einen Einschlag haben, um einen Zeitpunkt zum Hochziehen des Leftfahrzeugs während des ersten Schrittes herbeizuführen.

15. Verfahren nach Anspruch 14, bei dem der Übergang vom ersten in den zweiten Schritt durch Aufrichten der Höhenruder (12) erfolgt, wobei das Öffnen der Klappen die Geschwindigkeit des Luftfahrzeugs kontrolliert.

16. Verfahren nach Anspruch 15, bei dem, wenn nach dem zweiten Schritt das Luftfahrzeug den Auftrieb angenommen hat, der Reserveschritt durch Einschlagen der Höhenruder (12) erfolgt, um einen Zeitpunkt zum Hochziehen des Luftfahrzeugs herbeizuführen, wobei die Klappen nun wieder geschlossen sind.

17. Verfahren zur Kontrolle der Geschwindigkeit nach Anspruch 11 eines Luftfahrzeugs vom Typ Raumflugzeug (10), umfassend Fahrwerksklappen (11), die dazu vorgesehen sind, als Luftbremsen von einer suborbitalen Raumfahrtsphase zu einer Luftfahrtsphase zu funktionieren, **dadurch gekennzeichnet, dass** der Übergang vom Raumfahrtsbereich zum Luftfahrtsbereich umfasst:
- einen ersten Schritt des Einschlagens der Höhenruder (12), um einen Zeitpunkt zum Hochziehen des Raumflugzeugs herbeizuführen, wobei das Raumflugzeug (10) eine praktisch vertikale Geschwindigkeit V mit starkem Einfallswinkel I hat, wobei das Raumflugzeug (10) im Wesentlichen in der Horizontalen gehalten wird;
- einen zweiten Schritt des Öffnens der Fahrwerksklappen (11) und des Aufrichtens des Höhenruders (12), wobei das Raumflugzeug (10) somit in den Sturzflug gebracht wird, wobei die Geschwindigkeit V des Raumflugzeugs (10) praktisch vertikal und mit geringem Einfallswinkel I ist;
- einen dritten Schritt des Einschlagens der Höhenruder (12), um einen Zeitpunkt zum Hochziehen des Raumflugzeugs (10) herbeizuführen, und des Schließens der Fahrwerksklappen (11), bei dem das Raumflugzeug (10) wieder einen Luftfahrtbetrieb aufnimmt, wobei das Raumflugzeug (10) und die Geschwindigkeit V auf die Horizontale zurückgeführt werden, wobei sich das Luftfahrzeug in einem geringen Einfallswinkel I befindet.

## Claims

1. Aeronautical spacecraft suited to aeronautical flight, comprising a body and at least one first wing structure (15) defining a lift-generating surface and attitude-control means, **characterized in that** said control means comprise one or more flaps positioned under the lift-generating surface and that can be maneuvered between a retracted position and an inclined, deployed, aerodynamic-braking position during the transition of the craft from a phase of space flight to a phase of aeronautical flight.

2. Aeronautical spacecraft according to Claim 1, for which the flap or flaps are suited to deployment at controllable variable inclinations.

3. Aeronautical spacecraft according to Claim 1 or 2, comprising at least one pair of flaps which are positioned on either side of a longitudinal axis of the craft.

4. Aeronautical spacecraft according to Claim 3, for which the flaps are suited to being controlled independently of one another so as to control the descent of the craft.

5. Aeronautical spacecraft according to any one of the preceding claims, for which all or some of the flaps are airbrake devices/landing gear doors (11).

6. Aeronautical spacecraft according to Claim 5, for which the flaps can be maneuvered according to the phases of flight independently of the landing gears or in conjunction with the landing gears.

7. Aeronautical spacecraft according to Claim 6, for which the flaps comprise a first axis of maneuvering for opening the flaps against the eye of the wind, the flaps then operating as airbrakes, and an axis of maneuvering for opening the flaps parallel to the eye of the wind, the flaps then operating as landing gear doors.

8. Aeronautical spacecraft according to Claim 5, 6 or 7, for which the airbrake flaps/landing gear doors (11) are maneuvered by actuators rated to allow the airbrakes to be opened partially during the transition between space descent and aeronautical descent and to allow the landing gear doors to be opened fully for landing, the actuators being suited to opening the flaps in a way that can be altered according to the phase of flight.

9. Aeronautical spacecraft according to any one of the preceding claims, for which the attitude-control means comprise pitch-attitude control surfaces (12).

10. Aeronautical spacecraft according to Claim 9, in which a second wing structure (15) comprises the pitch-attitude control surfaces (12).

11. Method for controlling the speed of an aircraft according to any one of the preceding claims during a descent phase of the aircraft with transition of the aircraft from a phase of space flight to a phase of aeronautical flight, this descent phase comprising:
- a first step of parabolical descent of the aircraft, the aircraft being in a position of high incidence;
- a second step of bringing the craft into a nose-down position; and
- a third step of the aircraft flattening out in aerodynamic flight at low incidence;
for which control of the speed of the aircraft is achieved in the second step by means of the opening of said flaps.

12. Method according to Claim 11, for which the high-incidence position is defined by an angle greater than 40° between the longitudinal axis and the speed axis of the craft.

13. Method according to Claim 11 or 12, for which the control of the speed of the craft by the opening of said flaps is begun during the first step.

14. Method according to Claim 11, 12 or 13, for which, with the means of controlling the attitude of the aircraft comprising pitch-attitude control surfaces (12), these are angled so as to apply a nose-up moment to the craft during the first step.

15. Method according to Claim 14, for which the transition from the first to the second step occurs through the straightening of the pitch-attitude control surfaces (12), the opening of the flaps controlling the speed of the aircraft.

16. Method according to Claim 15, for which, with the aircraft having created lift at the end of the second step, the flattening-out step is performed by angling the pitch-attitude control surfaces (12) in such a way as to apply a nose-up moment to the aircraft, the flaps then being closed again.

17. Method according to Claim 11 for controlling the speed of a craft of the space plane (10) type, comprising landing gear doors (11) suited to operating as airbrakes, from a phase of suborbital space flight to a phase of aeronautical flight, **characterized in that** the transition from the space domain to the aeronautical domain involves:
- a first step of angling the pitch-attitude control surfaces (12) in such a way as to apply a nose-up moment to the space plane, the space plane (10) having a speed V that is practically vertical with high incidence I, the space plane (10) being kept substantially horizontal;
- a second step of opening the landing gear doors (11) and of straightening the pitch-attitude control surface (12), the space plane (10) thus being brought into a nose-down configuration, the speed V of the space plane (10) being practically vertical with low incidence I;
- a third step of angling the pitch-attitude control surfaces (12) in such a way as to apply a nose-up moment to the space plane (10) and of closing the landing gear doors (11), for which step the space plane (10) reverts to aeronautical operation, the space plane (10) and the speed V being returned to the horizontal, the aircraft being at a low incidence I.
